Europäisches Patentamt

European Patent Office

Office européen des brevets

(19)

(11) **EP 1 176 452 A1**

(12) **DEMANDE DE BREVET EUROPEEN**

(43) Date de publication:
**30.01.2002 Bulletin 2002/05**

(51) Int Cl.[7]: **G02B 27/40**, G02B 27/16, G02B 7/34

(21) Numéro de dépôt: **01401903.8**

(22) Date de dépôt: **16.07.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **27.07.2000 FR 0009835**

(71) Demandeur: **ALCATEL**
**75008 Paris (FR)**

(72) Inventeurs:
• **Pigouche, Olivier**
**06130 Grasse (FR)**
• **Savaria, Eric**
**06580 Pegomas (FR)**

(74) Mandataire: **Smith, Bradford Lee et al**
**COMPAGNIE FINANCIERE ALCATEL Dépt. Propr. Industrielle, 30, avenue Kléber**
**75116 Paris (FR)**

(54) **Procédé et dispositif pour la mesure de la defocalisation d'un instrument d'optique**

(57) Procédé et dispositif pour la mesure de la défocalisation affectant un instrument optique (1). Des moyens de détection (5), disposés par rapport à l'optique de l'instrument à un niveau où convergent les rayons lumineux provenant d'un objet source situé à l'infini, déterminent les positions où sont reçus les rayons lumineux qui traversent cette optique.

Des moyens de séparation (4) permettent de diviser en au moins deux sous-faisceaux les rayons optiques reçus. Des moyens de traitement de données (6) permettent d'effectuer une corrélation entre deux images d'une même zone de l'objet source qui sont simultanément obtenues par l'intermédiaire des moyens de détection (5), un calcul du décalage existant entre ces deux images et un calcul d'évaluation de la défocalisation à partir de la valeur calculée de décalage entre images.

FIG. 1

EP 1 176 452 A1

## Description

L'invention concerne un procédé et un dispositif destinés à permettre la mesure de la défocalisation qui affecte un instrument optique exploité à des fins d'acquisition d'image, et, par exemple un appareil photographique, un instrument astronomique ou un équipement satellisé d'observation optique de la Terre.

La netteté des images fournies par un instrument d'optique, tel qu'envisagé ci-dessus, dépend de la qualité de mise au point mise à disposition des utilisateurs. Cette qualité est directement liée aux possibilités offertes au niveau de l'instrument pour positionner exactement le récepteur d'image ou plus précisément la surface de ce récepteur où se focalisent les faisceaux lumineux donnant naissance à l'image après avoir traversé l'optique que comporte l'instrument. Comme connu, ce récepteur d'image est par exemple une pellicule photographique ou encore un capteur électro-optique et en particulier un capteur de type CCD (Charge Coupled Device).

Pour différentes raisons, l'utilisateur est généralement amené à effectuer le réglage de la mise au point de l'instrument qu'il utilise préalablement à l'acquisition d'une image. Ceci est notamment le cas, lorsqu'un objet, dont on veut obtenir une image, n'est pas à l'infini, comme cela se produit avec un instrument de type appareil photographique. C'est aussi le cas, lorsque les conditions d'acquisition d'image diffèrent de celles en vigueur, lors d'un réglage au sol, dans le cas d'un instrument optique spatialisé, par exemple en raison des différences dues à l'apesanteur et aux effets thermoélastiques à haute altitude ou dans l'espace.

L'utilisateur a souvent la possibilité d'agir sur un mécanisme de refocalisation de l'instrument qu'il utilise, ce mécanisme agissant par exemple par déplacement d'une ou de plusieurs des lentilles que comporte l'instrument optique. De telles actions correctives impliquent de mesurer préalablement de combien il faut déplacer la surface de focalisation pour obtenir la netteté d'image souhaitée.

Plusieurs procédés sont utilisables pour réaliser une mesure de défocalisation, notamment lors d'un vol, pour un instrument d'optique, ils peuvent être groupés en trois catégories.

Une première catégorie regroupe les procédés qui impliquent de déplacer la surface de focalisation d'un instrument sur l'ensemble des positions possibles à l'aide d'un mécanisme de refocalisation comporté par l'instrument. La position optimale pour la surface de focalisation est alors déterminée à l'aide d'un critère mathématique ou visuel. Il est notamment prévu d'exploiter certaines caractéristiques propres au plan focal de l'instrument optique et par exemple la redondance de rétines existant au niveau de cet instrument, pour n'explorer qu'une partie des positions possibles, en déduisant en particulier le signe de la défocalisation.

Une seconde catégorie regroupe les procédés où la fonction de transfert de modulation FTM d'un instrument est calculée à partir des images d'objets connus, par exemple de mires ou de transitions en bord de plage. La défocalisation peut alors être déduite selon un modèle instrumental et à partir de la valeur de fonction de transfert de modulation calculée.

Une troisième catégorie regroupe les procédés où un dispositif supplémentaire implanté dans un instrument est pris en compte pour calculer le défaut de mise au point. Ce dispositif est par exemple un analyseur de surface d'onde permettant d'analyser la forme de la surface d'onde et donc d'agir sur les composants de l'instrument optique en vue de corriger cette surface. Une méthode connue, la méthode de SHACK-HARTMANN, consiste à échantillonner un front d'onde optique à l'aide d'un capteur composé d'une pluralité de micro-lentilles disposées selon une matrice à deux dimensions et en particulier d'un capteur réalisé en technologie CCD. Chaque micro-lentille définit une sous-pupille et focalise une portion de front d'onde parfaitement plan. L'image obtenue se présente sous la forme d'un réseau de taches et l'analyseur mis en oeuvre mesure le déplacement des taches par rapport à celles qui ont été obtenues pour un front d'onde parfaitement plan. Ces déplacements sont proportionnels à la pente locale du front d'onde sur chaque sous-pupille. Un algorithme permet de reconstruire le front d'onde sur une partie d'un faisceau, voire sur la totalité de ce faisceau.

Le dispositif de mesure de défocalisation, selon l'invention, est prévu pour être exploité selon un procédé entrant dans la troisième catégorie évoquée ci-dessus et il est donc destiné à être implanté dans un instrument optique afin de permettre d'en déterminer la défocalisation.

Ce procédé est destiné à permettre la mesure de la défocalisation affectant un instrument optique d'acquisition d'image qui est équipé d'un dispositif incorporant des moyens de détection optique, disposés par rapport à l'optique de l'instrument à un niveau où convergent les rayons lumineux provenant d'un objet source situé à l'infini pour permettre de déterminer les positions, par rapport à un plan de référence, où sont reçus les rayons lumineux qui traversent cet instrument optique.

Selon une caractéristique de l'invention, ce procédé comporte les étapes suivantes :

- division en au moins deux sous-faisceaux de l'ensemble des rayons optiques reçus par l'instrument optique d'un objet source susceptible d'être considéré comme positionné à l'infini, de manière que l'un des sous-faisceaux soit constitué de rayons lumineux directement transmis au travers de l'instrument et du dispositif qu'il comporte depuis une zone déterminée de l'objet source et que l'autre soit constitué de rayons lumineux déviés par réflexion dans le dispositif qui sont parvenus au travers de l'instrument de la même zone déterminée que ceux qui constituent l'autre faisceau ;

- corrélation de deux images respectivement. produites à partir d'un faisceau directement transmis et à partir d'un faisceau réfléchi obtenus d'une même zone d'objet source ;
- calcul du décalage existant entre les deux images par moyennage des décalages déterminés à leur niveau ;
- évaluation de la défocalisation affectant l'optique de l'instrument à partir de la valeur calculée de décalage entre images.

L'invention propose aussi un dispositif pour la mesure de la défocalisation affectant un instrument optique d'acquisition d'image doté de moyens matériels et/ou logiciels permettant d'effectuer une refocalisation.

Selon une caractéristique de l'invention, ce dispositif comporte des moyens matériels de séparation lui permettant de diviser en au moins deux sous-faisceaux les rayons optiques reçus de l'objet source pour permettre d'obtenir au moins deux images de cet objet source au niveau de moyens de détection d'image agencés pour permettre de déterminer la position précise de chacun des points ou pixels d'image dans un plan de référence correspondant au plan focal de l'instrument. Il dispose par ailleurs de moyens de traitement de données dûment programmés pour lui permettre d'effectuer successivement une corrélation entre deux images d'une même zone de l'objet source qui sont simultanément obtenues par l'intermédiaire des moyens de détection, un calcul du décalage existant entre ces deux images par moyennage des décalages déterminés à leur niveau et un calcul d'évaluation de la défocalisation à partir de la valeur calculée de décalage entre images, en tenant compte de la focale et du diamètre de la pupille d'entrée de l'instrument, ainsi que de la dimension d'un pixel au niveau d'un plan de référence des moyens de détection.

Selon l'invention, les moyens matériels de séparation du dispositif permettant d'obtenir deux images d'une même zone d'un objet source sont constitués par au moins un barreau, d'allure rectangulaire, composé de deux prismes en verre, à section transversale en forme de triangle rectangle, qui sont longitudinalement accolés par une de leurs faces longitudinales, l'un de ces prismes comportant un évidemment central s'ouvrant dans la face longitudinale par laquelle il s'accole ou une surface réfléchissante au niveau de cette face, de manière qu'une partie d'un faisceau lumineux, qui pénètre dans le barreau sous un angle lui permettant de traverser un premier des deux prismes et la transition entre faces longitudinales accolées de ces prismes sans être dévié dans les zones de ces faces qui sont jointives, soit séparée d'une autre partie de ce même faisceau qui est réfléchie au niveau de la transition existant entre la face longitudinale d'accolement du premier prisme et l'évidemment central du second ou de la surface réfléchissante, lesdites parties de faisceau étant respectivement reçues par des moyens de détection constitués sous la forme de barrettes à structure matricielle, notamment réalisées en technologie CCD, qui sont collées sur les faces longitudinales des prismes pour recevoir soit une partie de faisceau transmis sans déviation au travers du barreau, soit une partie de faisceau réfléchi.

L'invention, ses caractéristiques et ses avantages sont précisés dans la description qui suit en liaison avec les figures évoquées ci-dessous.

La figure 1 est un schéma de principe où est représenté un instrument optique d'acquisition d'image auquel est associé un dispositif permettant d'en mesurer la défocalisation et éventuellement de la compenser.

Les figures 2, 3 et 8 sont des schémas de principe illustrant les relations entre deux images.

La figure 4 est un organigramme relatif au procédé de mesure de défocalisation, selon l'invention.

Les figures 5, 6 et 7 sont des schémas relatifs à l'agencement de séparation de faisceau, selon l'invention.

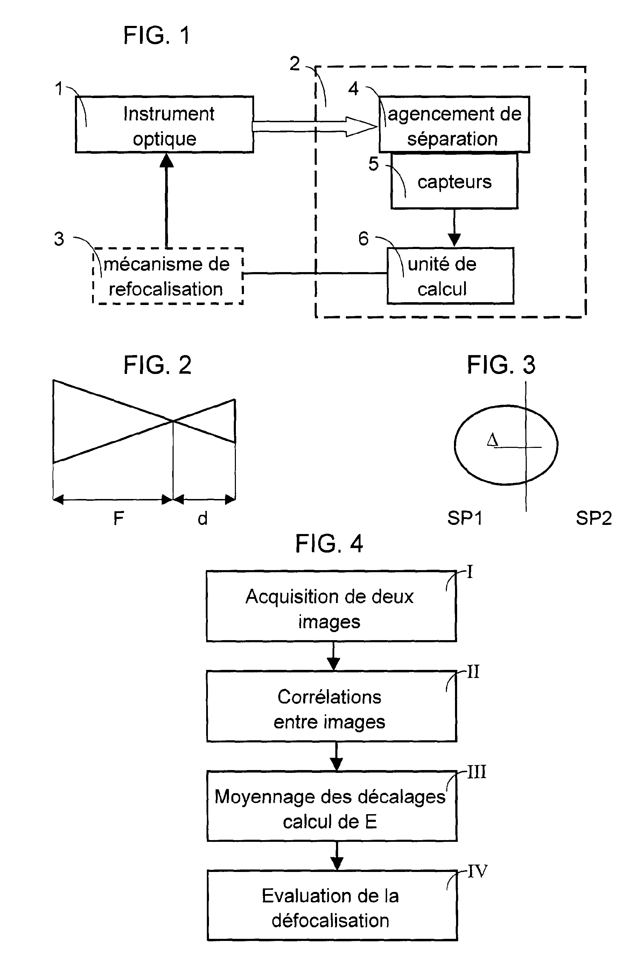

Le schéma de principe, présenté sur la figure 1, montre un instrument d'optique 1 exploité à des fins d'acquisition d'image, tel qu'envisagé plus haut. Cet instrument est supposé équipé d'un dispositif d'évaluation de défocalisation 2 et éventuellement d'un mécanisme de refocalisation 3.

Le dispositif d'évaluation de défocalisation 2 comporte un agencement de séparation 4 permettant de séparer le faisceau lumineux que produit l'instrument optique 1 à partir d'un objet source considéré comme situé à l'infini en deux faisceaux dans des conditions qui sont développées par la suite. Des moyens de détection d'image ici supposés constitués par des capteurs 5 sont prévus pour permettre de déterminer la position précise de chacun des points ou pixels d'image dans un plan de référence qui correspond au plan focal de l'instrument. Des moyens de traitement dûment programmés constituent une unité de calcul 6 qui est associée à l'instrument optique et aux équipements qui lui sont associés.

Le dispositif 2 qui permet de mesurer la défocalisation affectant un instrument optique d'acquisition d'image, selon l'invention est un dispositif qui comporte des moyens permettant de créer optiquement au moins deux sous-pupilles à partir de la pupille d'entrée de l'instrument en séparant géométriquement les rayons optiques convergents vers la surface de focalisation de cet instrument optique en deux sous-faisceaux convergents optiquement. Un capteur d'image est placé au point de convergence de chacun des deux faisceaux pour recevoir du signal provenant d'un même point objet dont l'image est recherchée.

Le réglage de l'instrument est réalisé pour permettre d'obtenir une focalisation exacte. Cette focalisation est obtenue lorsque, d'une part, les taches géométriques produites par les deux faisceaux sur la surface de focalisation qui constituent les images sont réduites chacune à un point en optique géométrique et, d'autre part, les deux images obtenues sur chaque capteur définissent une position de référence. Si l'instrument optique est défocalisé, les réponses impulsionnelles qui correspondent respectivement à chaque sous-faisceau, se trouvent être homothétiques de la partie de la pupille d'entrée qui leur correspond sur le plan de l'optique géométrique. Leurs barycentres sont distincts et les deux images qui en découlent sont décalées par rapport à leur position de référence.

Par des techniques de corrélation d'images et par moyennage des résultats, on peut calculer avec une bonne précision le décalage E qui est directement lié à la défocalisation, étant supposé que la forme des sous-pupilles est précisément connue. Si l'on désigne par F la focale de l'optique de l'instrument, par $\Delta$ la distance entre les barycentres des deux sous-pupilles référencées SP1 et SP2 et par d la défocalisation, comme schématisé sur les figures 2 et 3, il est possible de définir le décalage entre images qui correspond à la distance entre barycentres à partir de la formule E=d$\Delta$/F. Un calcul plus précis peut être effectué à partir de la combinaison optique de l'instrument en utilisant un logiciel spécialisé, tel que le logiciel de calcul optique "code V" de la société "Optical Research Associates". Ceci permet d'évaluer les réponses impulsionnelles associées aux sous-pupilles, telles que SP1, SP2, en optique ondulatoire. Une précision très améliorée peut alors être obtenue en ce qui concerne la défocalisation en particulier pour les faibles défocalisations.

Le procédé mis en oeuvre peut être résumé par l'organigramme schématisé en figure 4, il comporte une première étape I qui implique l'acquisition de deux images ou plus précisément de deux demi images, cette étape est réalisée par l'intermédiaire d'un agencement spécifique de séparation de faisceau implanté à cet effet dans l'instrument optique dont on veut mesurer la défocalisation.

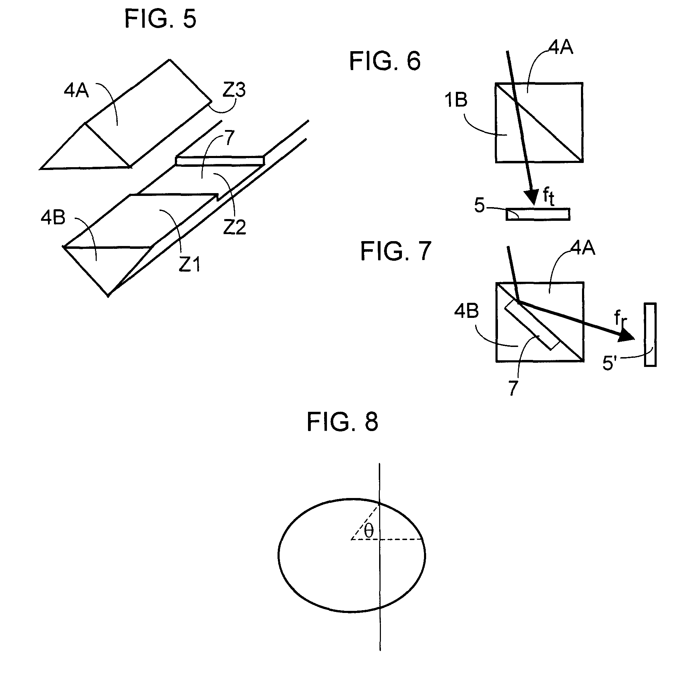

Un tel agencement de séparation de faisceau est ici supposé réalisé à l'aide de deux prismes optiques, 4A et 4B, à section transversale en triangle rectangle illustrés sur la figure 4. Ces prismes en verre sont longitudinalement accolés de manière à se présenter extérieurement sous la forme d'un barreau à section transversale rectangulaire, l'un d'eux, soit ici 4B, comportant un évidemment central 7, d'allure rectangulaire, dans celle de ces trois faces longitudinales par l'intermédiaire de laquelle il est accolé à l'autre prisme, comme schématisé sur les figures 6 et 7 qui correspondent à des coupes transversales, l'une dans une zone d'extrémité Z1 du barreau et l'autre dans la zone centrale évidée Z2. L'évidemment central 7 peut éventuellement être remplacé par une surface réfléchissante réalisée au niveau de la face du prisme correspondant à celle où se situe l'évidemment, lorsque ce dernier est alternativement prévu.

Le barreau rectangulaire constitué par les deux prismes 4A, 4B, collés l'un sur l'autre présente donc deux configurations optiques principales. Ces configurations ont des caractéristiques différentes au niveau des transitions qui se trouvent respectivement entre les faces accolées des prismes, pour chacune des zones d'extrémité Z1 du prisme 4B collées sur la face Z3 du prisme 4A, et au niveau de l'évidemment 7 entre la zone centrale Z2 du prisme 4A et la partie de face Z3 du prisme 4B lui faisant face.

De ce fait un faisceau lumineux incident f pénétrant dans le barreau par l'une des faces du prisme 4A, sous un angle qui lui permet de traverser la transition entre zone Z1 et face Z3, sans déviation, est par contre totalement réfléchi au niveau de la transition avec discontinuité d'indice qui est créée par la présence de l'évidemment 7 ou de la surface réfléchissante en regard de la face Z3 dans la partie centrale du barreau.

Des modules de détection, tels 5 et 5', qui sont par exemple des barrettes matricielles réalisées en technologie CCD, assurent la récupération des faisceaux $f_t$ et $f_r$ obtenus à partir du faisceau incident f, soit par transmission sans réflexion au travers du barreau en extrémité de ce dernier, soit par réflexion en zone centrale de barreau.

Il existe pratiquement des zones intermédiaires où la distinction entre transmission directe et réflexion n'est pas complète, dans la mesure où la convergence des rayons lumineux d'un faisceau incident dans le plan focal se produit après la réflexion d'une partie de ce faisceau incident au niveau de la surface de transition à discontinuité d'indice, qui est constituée dans la zone centrale du barreau en verre par la présence de l'évidemment 7 au long de la face Z3 du prisme 4A. Les rayons lumineux issus d'une source ponctuelle située à l'infini forment une tache qui est homothétique de la pupille d'entrée de l'instrument et le faisceau se divise en deux sous-faisceaux lorsque la tache se trouve positionnée à cheval sur la transition transmission-réflexion. L'objet à l'infini que constitue la source ponctuelle est alors simultanément vu par les modules de détection 5 et 5' et deux sous-pupilles sont obtenues à partir de la pupille d'entrée tronquée par le bord de la transition transmission-réflexion.

Si la pupille d'entrée de l'instrument est circulaire de rayon R et sans obturation centrale et lorsque la transition transmission-réflexion est perpendiculaire aux lignes de la barrette matricielle de détection constituant chacun des modules 5 et 5', il est possible de calculer analytiquement la position du barycentre des sous-pupilles en fonction de l'angle $\theta$ par lequel la transition peut être repérée, comme schématisé sur la figure 8.

Cette position est donnée par l'équation :

$$RG(\theta)=\frac{2}{3}R\frac{\sin(\theta)^3}{\theta-\frac{\sin(2\theta)}{2}}$$

L'écart entre les barycentres des deux sous-pupilles est alors $\Delta(\theta)=R(G(\theta)+G(\pi-\theta))$, au centre de la

zone d'influence $\Delta = \frac{8}{3\pi} R = 0,8488\, R$, au bord $\Delta$ est égal à R.

Compte tenu des caractéristiques de l'agencement de séparation de faisceau, selon l'invention, il est possible de relier l'angle θ à la position du pixel dans les images.

Selon une seconde étape référencée II de la méthode de mise en oeuvre telle que schématisée sur la figure 5, il est prévu d'effectuer une corrélation entre images. Cette corrélation est suivie d'une étape III de moyennage des décalages qui est exploitée pour permettre le calcul du décalage entre images E. La mesure de ce décalage E est suivie d'une étape IV au cours de laquelle est évaluée la défocalisation d affectant l'instrument optique. En effet, la mesure du décalage E se traduit par la formule E= $\Delta d/F$, où $\Delta$ et F sont connus, $\Delta$ étant la distance entre barycentres des sous-pupilles et F étant la focale de l'instrument. La valeur du décalage entre images s'obtient en tenant compte du rang de colonne atteint au niveau de la barrette matricielle d'un module de détection, cette valeur étant constante le long des colonnes.

Dans le cas général où les lignes des barrettes ne sont pas perpendiculaires à la transition réflexion-transmission, le calcul doit tenir compte de leur rotation.

La corrélation implique que les images traitées soient acquises à partir d'une même zone observée de l'objet servant de source d'image, cette zone observée ne devant pas être homogène de manière à présenter des caractéristiques permettant de la reconnaître au niveau des images destinées à être soumises à corrélation. Par ailleurs, les performances de corrélation sont influencées par le fait que chacune des sous-pupilles a une surface inférieure à la pupille de l'instrument optique, le nombre d'ouverture réel étant différent de celui de cet instrument, ce qui conduit à ce que le rapport signal/bruit et la fonction de transfert de modulation soient dégradés, même s'il est possible d'adapter la dynamique avant numérisation pour limiter la dégradation du rapport signal/bruit.

La corrélation peut être obtenue par divers moyens bien connus de l'homme de métier. Elle est par exemple réalisable par comparaison des phases des transformées de Fourier. Elle peut aussi être obtenue par calcul d'une surface de corrélation en promenant une vignette provenant d'une image dans une fenêtre, dite imagette, de l'autre image. Par interpolation, il est obtenu le maximum de la surface d'où est déduit le décalage local entre images. L'interpolation de la surface de corrélation est susceptible d'être réalisé par différents moyens. L'un de ces moyens est constitué par un interpolateur de Shannon. Il est également possible de procéder par dichotomie et de ré-échantillonner les images avant de calculer la surface de corrélation, le ré-échantillonnage d'image est par exemple réalisé à l'aide d'un algorithme de traitement bi-linéaire ou bi-cubique.

Comme déjà indiqué plus haut, la mesure du décalage E est donnée par la formule : E=$\Delta d/F$=4Dd/ 3πF dans le cas d'un modèle simple donné par l'optique géométrique et sans obturation centrale, la distance $\Delta$ entre barycentres des sous-pupilles étant égale à 8R/ 3π comme indiqué plus haut.

La mesure de la défocalisation en microns est donc donnée par la formule :

$$d = \frac{3\pi}{4}\frac{F}{D}Ep$$

où D est le diamètre de la pupille de l'instrument optique, F est la focale de cet instrument, E est le décalage moyen des images mesuré par corrélation et exprimé en pixel, la taille p du pixel étant mesurée en microns.

Cette mesure de défocalisation est susceptible d'être affectée par des erreurs dont les principales sont respectivement dues :

- au corrélateur ;
- à l'imprécision de l'alignement des barrettes matricielles de détection par rapport au barreau en verre sur lequel elles sont collées ;
- à la défocalisation relative existant entre l'agencement de mesure de défocalisation et l'agencement principal d'imagerie ;
- à la relativité de la planéité des barrettes matricielles, celle-ci étant ici supposée négligeable du fait du faible nombre de pixels pris en compte.

Dans un exemple d'application, il est prévu un rapport F/D égal à 8, une valeur de p égale à 13 μm et une erreur de corrélation égale à 0,02 pixel, après moyennage.

L'erreur maximale constatée sur la connaissance de la défocalisation due au corrélateur est de 4,9 μm.

Une erreur due à l'imprécision d'alignement, de l'ordre de 2 μm, assimilable à un biais fixe du corrélateur qui est indépendant de la défocalisation, se traduit par une erreur de 37,7 μm de défocalisation, correspondant à un biais du corrélateur de 2/13 pixel. Cette erreur est susceptible d'être moyennée, lorsque plusieurs agencements de séparation sont disposés côte à côte.

L'erreur due à la défocalisation relative entre l'agencement principal d'imagerie et l'agencement de mesure de défocalisation est prévue inférieure à ± 5 μm ce qui conduit à un bilan maximal de 38,4 μm d'erreur sur la mesure de la défocalisation, ce bilan étant obtenu par sommation quadratique, les causes des différentes erreurs étant supposées indépendantes.

## Revendications

1. Procédé pour la mesure de la défocalisation affectant un instrument optique d'acquisition d'image (1) qui est équipé d'un dispositif d'évaluation de défocalisation (2) incorporant des moyens de détection optique (5), disposés par rapport à l'optique de l'instrument à un niveau où convergent les rayons lumineux provenant d'un objet source situé à l'infini pour permettre de déterminer les positions, par rapport à un plan de référence, où sont reçus les rayons lumineux qui traversent cet instrument optique, **caractérisé en ce qu'**il comporte les étapes suivantes :

- division en au moins deux sous-faisceaux de l'ensemble des rayons optiques reçus par l'instrument optique d'un objet source susceptible d'être considéré comme positionné à l'infini, de manière que l'un des sous-faisceaux soit constitué de rayons lumineux directement transmis au travers de l'instrument et du dispositif qu'il comporte depuis une zone déterminée de l'objet source et que l'autre soit constitué de rayons lumineux déviés par réflexion dans le dispositif qui sont parvenus au travers de l'instrument de la même zone déterminée que ceux qui constituent l'autre faisceau ;
- corrélation de deux images respectivement produites à partir d'un faisceau directement transmis et à partir d'un faisceau réfléchi obtenus d'une même zone d'objet source ;
- calcul du décalage existant entre les deux images par moyennage des décalages déterminés à leur niveau ;
- évaluation de la défocalisation affectant l'optique de l'instrument à partir de la valeur calculée de décalage entre images.

2. Dispositif pour la mesure de la défocalisation affectant un instrument optique d'acquisition d'image (1) et notamment d'un instrument doté de moyens matériels et/ou logiciels (3) permettant d'effectuer une refocalisation, ledit dispositif incorporant des moyens de détection électro-optiques (5), à structure matricielle, disposés par rapport à l'optique de l'instrument à un niveau où convergent les rayons lumineux provenant d'un objet source situé à l'infini pour permettre de déterminer les positions où sont reçus les rayons lumineux qui traversent cette optique, le dispositif étant **caractérisé en ce qu'**il comporte des moyens matériels de séparation (4) lui permettant de diviser en au moins deux sous-faisceaux les rayons optiques reçus de l'objet source pour permettre d'obtenir deux images de cet objet source au niveau des moyens de détection optique qui sont agencés pour permettre de déterminer la position précise de chacun des points ou pixels d'image dans un plan de référence correspondant au plan focal de l'instrument, ledit dispositif disposant de moyens de traitement de données (6) dûment programmés pour lui permettre d'effectuer successivement une corrélation entre deux images d'une même zone de l'objet source qui sont simultanément obtenues par l'intermédiaire des moyens de détection (5), un calcul du décalage existant entre ces deux images par moyennage des décalages déterminés à leur niveau et un calcul d'évaluation de la défocalisation à partir de la valeur calculée de décalage entre images, en tenant compte de la focale et du diamètre de la pupille d'entrée de l'instrument, ainsi que de la dimension d'un pixel au niveau d'un plan de référence des moyens de détection.

3. Dispositif, selon la revendication 2, dans lequel les moyens matériels de séparation (4) permettant d'obtenir deux images d'une même zone d'un objet source sont constitués par au moins un barreau, d'allure rectangulaire, composé de deux prismes en verre (4A, 4B), à section transversale en forme de triangle rectangle, qui sont longitudinalement accolés par une de leurs faces longitudinales, l'un de ces prismes comportant un évidemment central (7) dans la face longitudinale par laquelle il s'accole ou une surface réfléchissante au niveau de cette face, de manière qu'une partie d'un faisceau lumineux, qui pénètre dans le barreau sous un angle lui permettant de traverser un premier (4A) des deux prismes et la transition entre faces longitudinales accolées de ces prismes sans être dévié dans les zones de ces faces qui sont jointives, soit séparée d'une autre partie de ce même faisceau qui est réfléchie au niveau de la transition existant entre la face longitudinale d'accolement du premier prisme et l'évidemment central du second ou de la surface réfléchissante, lesdites parties de faisceau étant respectivement reçues par les moyens de détection (5) constitués sous la forme de barrettes à structure matricielle, notamment réalisées en technologie CCD, qui sont collées sur les faces longitudinales des prismes pour recevoir soit une partie de faisceau transmis sans déviation au travers du barreau, soit une partie de faisceau réfléchi.

## FIG. 1

1 — Instrument optique

2

4 — agencement de séparation

5 — capteurs

3 — mécanisme de refocalisation

6 — unité de calcul

## FIG. 2

F    d

## FIG. 3

$\Delta$

SP1                SP2

## FIG. 4

I — Acquisition de deux images

II — Corrélations entre images

III — Moyennage des décalages calcul de E

IV — Evaluation de la défocalisation

FIG. 5

FIG. 6

FIG. 7

FIG. 8

**Office européen des brevets**

# RAPPORT DE RECHERCHE EUROPEENNE

Numéro de la demande

EP 01 40 1903

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | DE 41 33 788 A (LEICA AG)<br>15 avril 1993 (1993-04-15)<br>* figures 3,7 *<br>--- | 1,2 | G02B27/40<br>G02B27/16<br>G02B7/34 |
| A | US 4 548 495 A (SUZUKI TAKEOMI)<br>22 octobre 1985 (1985-10-22)<br>* abrégé *<br>--- | 1,2 | |
| A | US 4 200 786 A (HOLLE WERNER)<br>29 avril 1980 (1980-04-29)<br>* abrégé *<br>--- | 1,2 | |
| A | DE 42 16 073 A (ASAHI OPTICAL CO LTD)<br>19 novembre 1992 (1992-11-19)<br>* colonne 3, ligne 34 - ligne 48 *<br>* colonne 4, ligne 1 - ligne 38 *<br>* colonne 4, ligne 62 - colonne 5, ligne 1 *<br>--- | 1,2 | |
| A | DE 199 49 580 A (ASAHI OPTICAL CO LTD)<br>20 avril 2000 (2000-04-20)<br>* colonne 3, ligne 14 - ligne 24 *<br>* colonne 12, ligne 53 - colonne 14, ligne 9 *<br>--- | 1,2 | **DOMAINES TECHNIQUES RECHERCHES (Int.Cl.7)**<br><br>G02B |
| A | EP 0 854 373 A (CANON KK)<br>22 juillet 1998 (1998-07-22)<br>* abrégé *<br>----- | 1,2 | |

Le présent rapport a été établi pour toutes les revendications

| Lieu de la recherche | Date d'achèvement de la recherche | Examinateur |
|---|---|---|
| LA HAYE | 23 novembre 2001 | Mollenhauer, R |

CATEGORIE DES DOCUMENTS CITES

X : particulièrement pertinent à lui seul
Y : particulièrement pertinent en combinaison avec un autre document de la même catégorie
A : arrière–plan technologique
O : divulgation non–écrite
P : document intercalaire

T : théorie ou principe à la base de l'invention
E : document de brevet antérieur, mais publié à la date de dépôt ou après cette date
D : cité dans la demande
L : cité pour d'autres raisons

.............................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**
EP 01 40 1903

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

23-11-2001

| Document brevet cité au rapport de recherche | | Date de publication | Membre(s) de la famille de brevet(s) | | Date de publication |
|---|---|---|---|---|---|
| DE 4133788 | A | 15-04-1993 | DE | 4133788 A1 | 15-04-1993 |
| | | | US | 5270527 A | 14-12-1993 |
| US 4548495 | A | 22-10-1985 | JP | 57142606 A | 03-09-1982 |
| | | | JP | 58058507 A | 07-04-1983 |
| US 4200786 | A | 29-04-1980 | DE | 2703290 A1 | 03-08-1978 |
| | | | JP | 53095624 A | 22-08-1978 |
| DE 4216073 | A | 19-11-1992 | JP | 3140500 B2 | 05-03-2001 |
| | | | JP | 4338707 A | 26-11-1992 |
| | | | JP | 4338708 A | 26-11-1992 |
| | | | JP | 3140501 B2 | 05-03-2001 |
| | | | JP | 4338709 A | 26-11-1992 |
| | | | JP | 3193404 B2 | 30-07-2001 |
| | | | JP | 4338710 A | 26-11-1992 |
| | | | DE | 4216073 A1 | 19-11-1992 |
| | | | DE | 4244873 C2 | 06-11-1997 |
| | | | DE | 4244874 C2 | 15-07-1999 |
| | | | DE | 4244875 C2 | 13-11-1997 |
| | | | FR | 2676552 A1 | 20-11-1992 |
| | | | FR | 2684196 A1 | 28-05-1993 |
| | | | FR | 2684197 A1 | 28-05-1993 |
| | | | GB | 2255870 A ,B | 18-11-1992 |
| | | | GB | 2286497 A ,B | 16-08-1995 |
| | | | GB | 2286498 A ,B | 16-08-1995 |
| | | | GB | 2286499 A ,B | 16-08-1995 |
| | | | US | 5448329 A | 05-09-1995 |
| | | | US | 5664239 A | 02-09-1997 |
| | | | US | 5612761 A | 18-03-1997 |
| | | | US | 5640225 A | 17-06-1997 |
| | | | JP | 5142463 A | 11-06-1993 |
| DE 19949580 | A | 20-04-2000 | JP | 2000121919 A | 28-04-2000 |
| | | | DE | 19949580 A1 | 20-04-2000 |
| EP 0854373 | A | 22-07-1998 | JP | 10177135 A | 30-06-1998 |
| | | | JP | 10177134 A | 30-06-1998 |
| | | | EP | 0854373 A1 | 22-07-1998 |

EPO FORM P0460

Pour tout renseignement concernant cette annexe : voir Journal Officiel de l'Office européen des brevets, No.12/82